# EUROPEAN PATENT APPLICATION

(11) **EP 0 530 700 A2**
(43) Date of publication of application: **10.03.1993**
(21) Application number: 92114732.8
(22) Date of filing: 28.08.1992
(51) Int. Cl.: G11B 15/675, G11B 25/06

(54) **A cassette tape mount for use in a cassette tape recorder**

(30) Priority: 30.08.1991 JP 219544/91; 28.04.1992 JP 109439/92
(71) Applicant: MATSUSHITA ELECTRIC INDUSTRIAL CO., LTD., Kadoma-shi, Osaka 571 (JP)
(72) Inventor: Shinohara, Isao, Ikoma-shi, Nara-ken (JP)
(74) Representative: Schwabe, Hans-Georg, Dipl.-Ing.

(57) **Abstract**

A tape cassette having a shutter which is slidable with respect to a cassette main body is inserted along side walls of a pair of cassette holders. A tape cassette having no shutter is inserted while guiding projections provided on side surfaces of the tape cassette are inserted into and slid along slots of the side walls. The cassette main body of each tape cassette is pressed by springs to be positioned.

## Description

### BACKGROUND OF THE INVENTION

### 1. Field of the Invention:

The present invention relates to a cassette tape mount for use in a cassette tape recorder in which different types of tape cassettes can be mounted, for example, a tape cassette having a slidable shutter which covers an opening for exposing a magnetic tape, such as a digital compact cassette (hereinafter, referred to as a DCC); and a tape cassette having no shutter wherein a magnetic tape is exposed through an opening, such as an analog compact cassette (hereinafter, referred to as an ACC).

### 2. Description of the Prior Art:

Recently, digital audio equipment has been actively developed for improving reproduction quality. In such a trend, DCCs capable of digital recording and digital reproduction have been a main target for the development. As tape recorders for a DCC, two systems are proposed: R-DAT using a rotary head, and S-DAT using a fixed head. The fixed head of the S-DAT has a similar construction with that of a tape recorder for an ACC which is in general use today. Accordingly, the S-DAT system has an advantage that a DCC which is similar in construction with the ACC can be used. A cassette tape mount which can be used both for a DCC and an ACC has been demanded.

A DCC usually has a shutter on a front face thereof. The shutter is opened by sliding with respect to a cassette main body to expose a stretched portion of a magnetic tape. When the shutter is opened, the stretched portion of the magnetic tape is exposed through openings in the front face of the cassette main body.

An ACC has a cassette main body which holds a magnetic tape with a portion of the magnetic tape in a stretched condition. A cassette main body has uncovered openings in a front face for exposing the magnetic tape, and a portion of the cassette main body in the vicinity of the openings is thicker in the width direction of the magnetic tape than a remaining portion thereof. This portion will be referred to as the thick portion, hereinafter. In the DCC and the ACC, a magnetic head, pinch rollers and the like are inserted into the openings to detect information recorded on the magnetic tape. In this specification, the "front" face of the tape cassette is the side of the DCC and the ACC which is inserted first into the cassette tape mount. The "back" side of the tape cassette is opposite to the front face.

The ACC has guiding projections on side surfaces of the cassette main body extending perpendicular to the front face. The guiding projections extend parallel with the side surfaces of the cassette main body.

The width of the cassette main body of the ACC with the exception of the guiding projections is substantially identical with that of the cassette main body of the DCC, but the thickness of the cassette main body of the ACC with the exception of the thick portion is slightly smaller than that of the DCC.

A cassette tape recorder used for both of a DCC and an ACC is required to have a cassette holder capable of holding both of the ACC and the DCC in the same cassette tape mount. Moreover, the ACC and the DCC should be held firmly so that the magnetic head of the cassette tape mount will be in stable contact with the magnetic tape.

### SUMMARY OF THE INVENTION

The cassette tape mount for use in a cassette tape recorder according to the present invention selectively receives a first tape cassette having a shutter and a second tape cassette having no shutter. The first tape cassette includes a magnetic tape having a stretched portion and an opening in a face of the tape cassette for exposing the stretched portion of the magnetic tape. The tape cassette further includes a shutter over the face which is slidable with respect to the face to uncover the opening. The second tape cassette includes a magnetic tape having a stretched portion and an opening in a face of the tape cassette for exposing the stretched portion of the magnetic tape. The second tape cassette further includes a thick portion in the vicinity of the opening. The thick portion has a larger thickness in a width direction of the magnetic tape than the face of the first tape cassette. The second tape cassette further includes guiding projections on side surfaces extending perpendicular to a direction in which the magnetic tape is stretched. A distance between the side surfaces is substantially identical with a width of the first tape cassette in the direction in which the magnetic tape is stretched. The cassette tape mount comprises a pair of cassette holders for holding side portions of an inserted tape cassette extending perpendicular to the direction in which the magnetic tape is stretched. The cassette holders are pivotable between a tape inserting position and an operating position. Each cassette holder includes a side wall opposed to the side surface of the tape cassette, a slot provided at the side wall for receiving the guiding projection, a pair of extending portions extending from the side wall substantially perpendicular to the side wall, and springs provided at one of the extending portions for pressing the side portion of the tape cassette against the other of the extending portions.

In a cassette tape mount for use in a cassette tape recorder according to the present invention, a first tape cassette is inserted along side walls of a pair of cassette holders. A second tape cassette is inserted while guiding projections thereof are inserted into slots of the side walls. The first and the second tape cassettes are pressed by springs and thus positioned.

Accordingly, the first and the second tape cassettes having different shapes from each other are both mounted in the cassette tape mount according to the present invention reliably and stably.

Thus, the invention described herein makes possible the advantages of providing (1) a cassette tape mount for use in a cassette tape recorder for reliably and firmly holding a tape cassette having a shutter and a tape cassette having a different shape with no shutter; and (2) a cassette tape mount for use in a cassette tape recorder for holding tape cassettes having different shapes each at a specified position with respect to a magnetic head and other members of the cassette tape mount.

These and other advantages of the present invention will become apparent to those skilled in the art upon reading and understanding the following detailed description with reference to the accompanying figures.

### BRIEF DESCRIPTION OF THE DRAWINGS

Figure **1** is a plan view of a cassette tape mount for use in a cassette tape recorder according the present invention in the case where a DCC is being mounted.

Figure **2** is a plan view of the cassette tape mount of Figure **1** in the case of mounting a DCC.

Figure **3** is a side view of the cassette tape mount of Figure **1**.

Figure **4A** is a front view of a DCC mountable in the cassette tape mount according to the present invention.

Figure **4B** is a view illustrating an operation of the DCC of Figure **4A**.

Figure **5** is a plan view of the cassette tape mount according to the present invention in the case of mounting an ACC.

Figure **6** is a front view of the ACC mountable in the cassette tape mount according to the present invention.

Figure **7** is a rear view of the cassette tape mount according to the present invention in the case of mounting an ACC.

Figure **8A** is a side view of the cassette tape mount according to the present invention in the case of mounting a DCC.

Figure **8B** is a side view of the cassette tape mount according to the present invention in the case of mounting an ACC.

Figure **9** is a plan view of another cassette tape mount according to the present invention in the case of mounting an ACC.

Figure **10** is a side view of an essential part of the cassette tape mount of Figure **9** in the case of mounting an ACC.

Figure **11** is a side view of the essential part of the cassette tape mount of Figure **9** in the case of mounting a DCC.

### DESCRIPTION OF THE PREFERRED EMBODIMENTS

Hereinafter, the present invention will be described by way of illustrating examples with reference to the accompanying drawings.

### Example 1

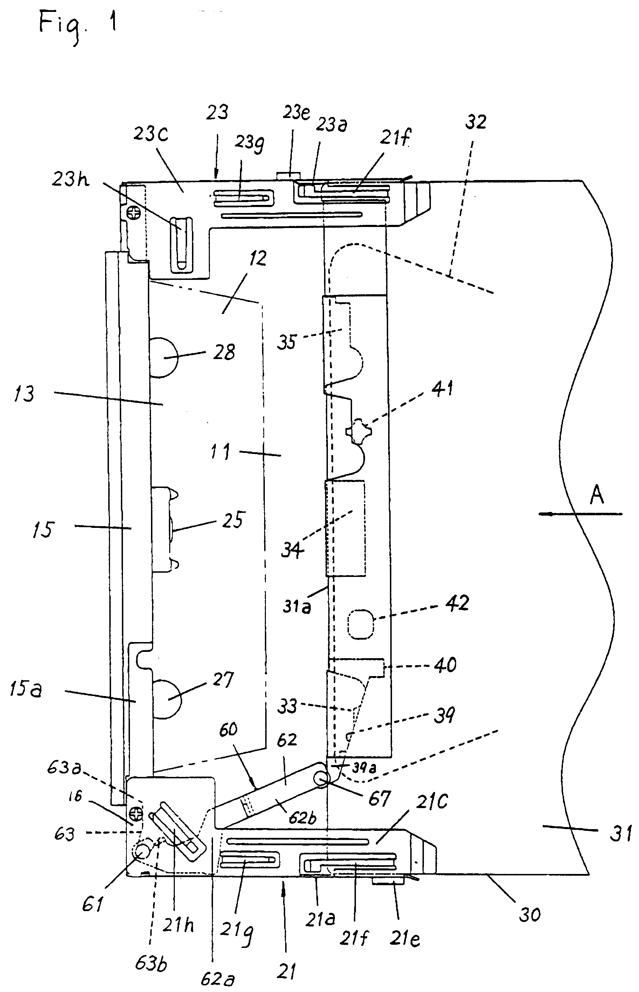

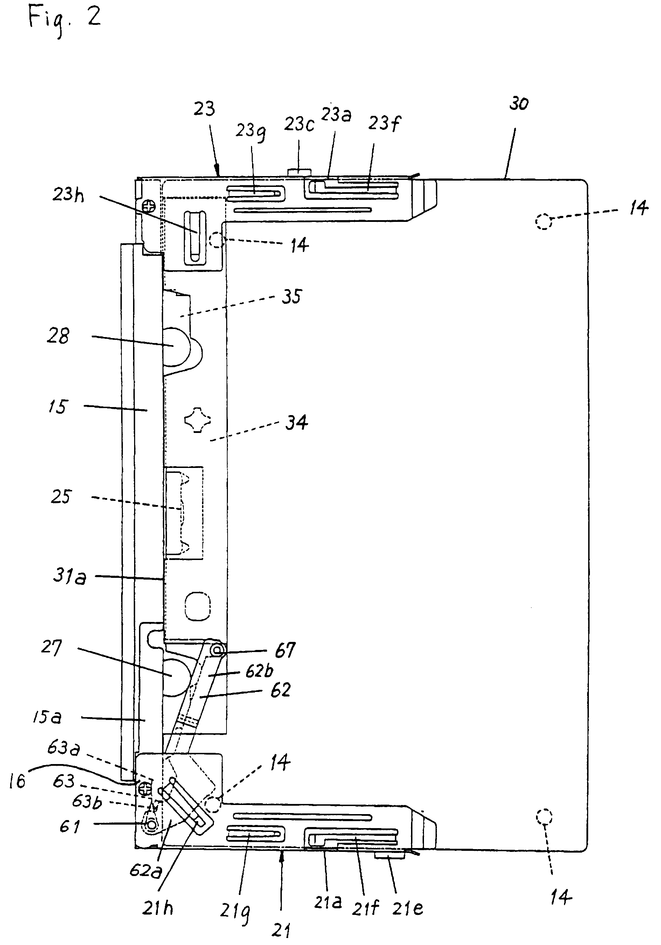

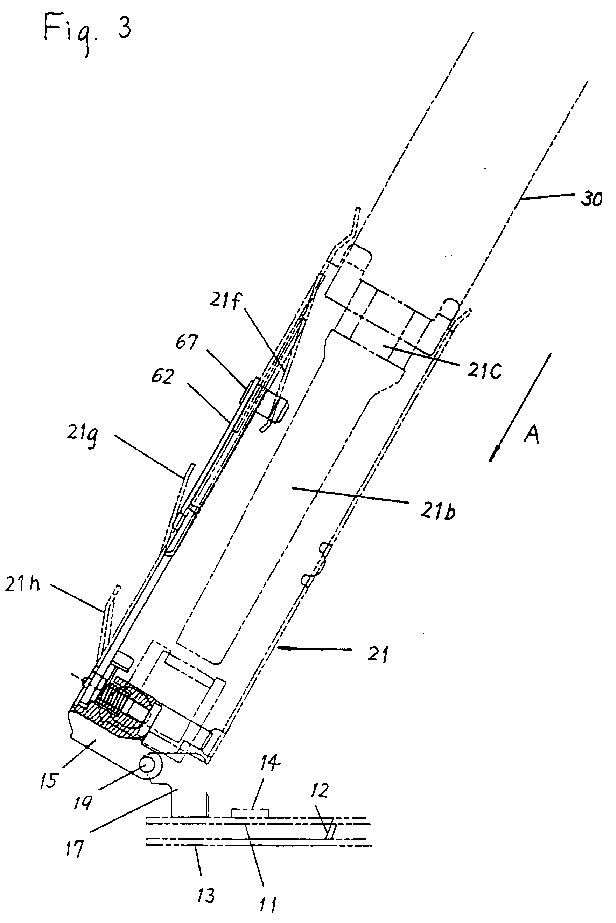

With reference to Figures **1** through **3**, the cassette tape mount for use in a cassette tape recorder according to a first example of the present invention includes an upper plate **11**, a lower plate **13** parallel with the upper plate **11**, and a holder main body **15** attached along a periphery of the upper plate **11**. The holder main body **15** is pivotably supported by a pair of holder supporters **17** (as shown in Figure **3**) by supporting shafts **19**. The holder supporters **17** are provided at opposite side portions of the upper plate **11**, and the supporting shafts **19** are also provided at opposite side portions of the upper plate **11**. As is shown in Figures **1** and **2**, the holder main body **15** has opposed cassette holders **21** and **23** extending perpendicular to the holder main body **15** from both ends thereof. When a DCC or an ACC is inserted along the cassette holders **21** and **23**, side portions of the DCC or the ACC are guided and held by the cassette holders **21** and **23**.

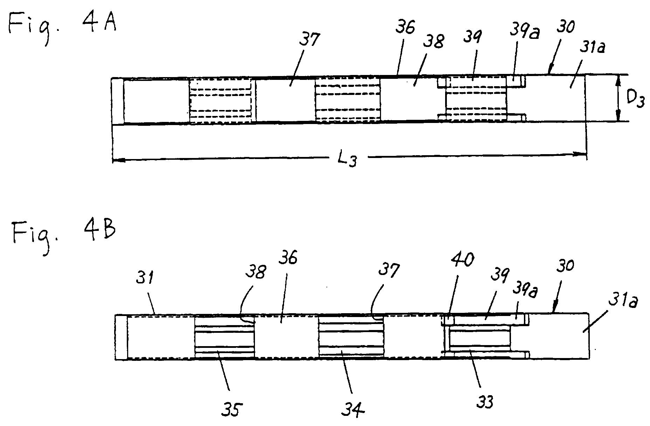

With continuing reference to Figures **1** and **2**, a DCC **30** is shown being inserted into the cassette tape mount along the cassette holders **21** and **23**. The DCC **30** includes a cassette main body **31** which houses a magnetic tape **32**. The magnetic tape **32** is wound around a pair of reels (not shown) provided inside the cassette main body **31**, and a portion of the magnetic tape **32** is stretched between the reels. The portion of the magnetic tape **32** stretched between the reels is parallel with a front face **31a** of the cassette main body **31**. The front face **31a** has three openings **33**, **34** and **35** (Figures **4A** and **4B**) for exposing the magnetic tape **32** and arranged in a direction in which the magnetic tape **32** is stretched (hereinafter, referred to as the tape stretching direction). Into the opening **34** disposed at a center of the front face **31a**, a magnetic head **25** of the cassette tape mount protrudes during operation of the cassette tape recorder. A first pinch roller **27** and a second pinch roller **28** provided on the holder main body **15** protrude into openings **33** and **35**, respectively, to engage the stretched portion of the magnetic tape **32** upon insertion of the DCC **30** into the cassette tape mount. The openings **33**, **34** and **35** are covered by a shutter **36** which is laterally slidable along the front face **31a** of the cassette main body **15** in the tape stretching direction. The shutter **36** is biased by a spring (not shown) provided between the cassette main body **31** and the shutter **36**. As is shown in Figures **4A** and **4B**, the shutter **36** has two openings **37** and **38** arranged in the tape stretching direction. When the shutter **36** is slid open to uncover the opening **33** against a force of the spring, the openings **37** and **38** of the shutter **36** are respectively aligned with the openings **34** and **35** of the cassette main body **31**, thereby uncovering the openings **34** and **35**.

As is shown in Figure **1**, the opening **33** includes a guide **39** which is angled diagonally away from the front face **31a** of the cassette main body **31**. An end portion of the guide **39** extends beyond the opening **33** toward a side edge of the cassette main body **31** so that a notch **39a** is exposed on the front face **31a** of the cassette main body **31** when the shutter **36** is covering the openings **33** through **35**. Opposite the notch **39a**, the guide **39** includes a lock groove **40** which extends inward (toward a back side of the DCC **30**) perpendicular to the tape stretching direction.

The shutter **36** is folded over the front face **31a** of the cassette main body **31** so as to cover a portion of a top surface and a portion of a bottom surface of the cassette main body **31** adjacent to the front face **31a**. The top surface of the cassette main body **31** is farther from the upper plate **11** than the bottom surface thereof is. As is shown in Figure **2**, when the shutter **36** is slid open to uncover the openings **33** through **35**, a first positioning hole **41** and a second positioning hole **42** on the bottom surface of the cassette main body **31** are also uncovered.

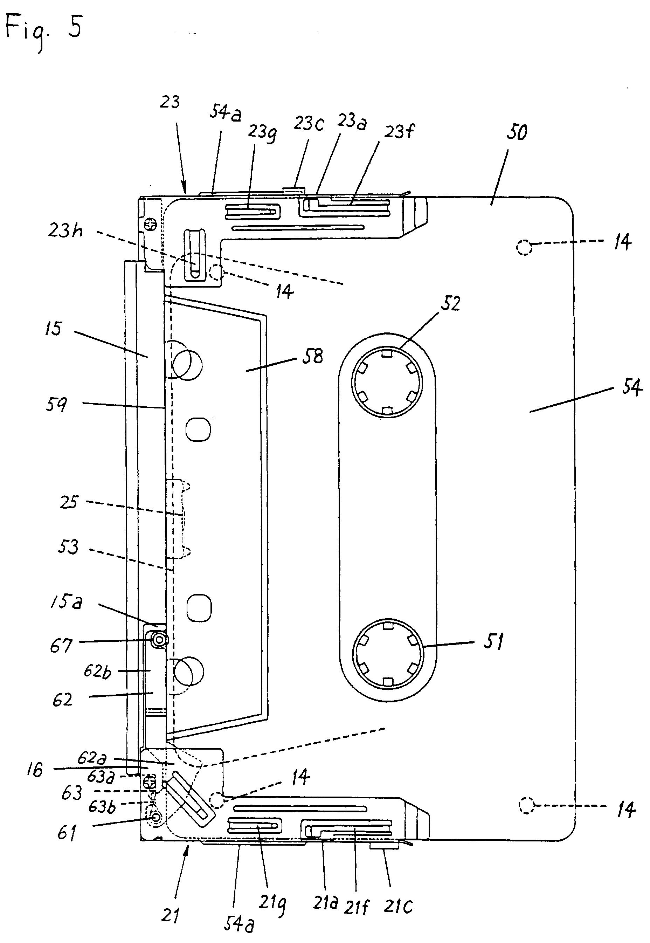

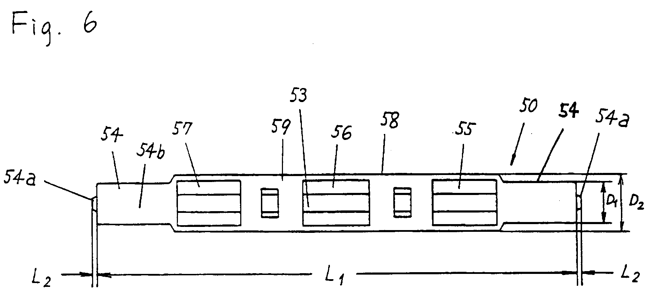

Figure **5** shows an ACC **50** having no shutter mounted in the cassette tape mount. The ACC **50** includes a cassette main body **54** which houses a magnetic tape **53** and a pair of reels **51** and **52** around which the magnetic tape **53** is wound. A portion of the magnetic tape **53** is stretched between the reels **51** and **52** parallel with a front face **54b** (Figure **6**) of the cassette main body **54**. As is shown in Figure **6**, the front face **54b** has three openings **55**, **56** and **57** arranged in a direction in which the magnetic tape **53** is stretched (hereinafter, referred to as the tape stretching direction). Upon insertion of the ACC **50** into the cassette tape mount, the magnetic head **25** of the cassette tape mount protrudes into the opening **56** to come in contact with the stretched portion of the magnetic tape **53**. The first and the second pinch rollers **27** and **28** of the cassette tape mount also protrude into the openings **55** and **57**, respectively. The cassette main body **54** has a thick portion **58** in the vicinity of the openings **55** through **57**. The thick portion **58** has a thickness **D₂** in the width direction of the magnetic tape **53**. The thickness **D₂** is larger than a thickness **D₂** of a remaining portion of the ACC **50** and also than the DCC **30**. Side surfaces of the ACC **50** extending perpendicular to the front face **54b** each have a guiding projection **54a** projecting by a length **L₂**. The guiding projections **54a** extend parallel with the side surfaces of the ACC **50**.

As illustrated by Figures **4A**, **4B** and **6**, a width **L₁** of the cassette main body **54** of the ACC **50** in the tape stretching direction is substantially identical with a width **L₃** of the cassette main body **31** of the DCC **30** in the tape stretching direction. A thickness **D₃** of the cassette main body **31** of the DCC **30** in the width direction of the magnetic tape **32** is slightly larger than the thickness **D₁** and is slightly smaller than the thickness **D₂**.

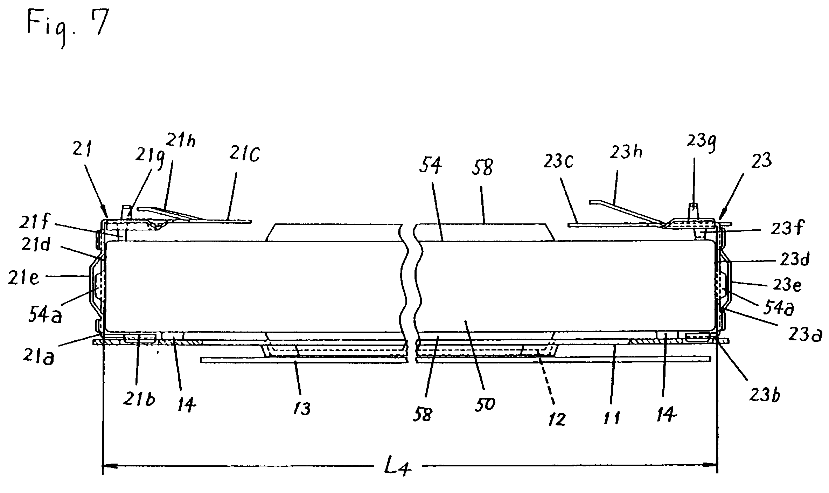

Figure **7** is a rear view of the cassette tape mount with the ACC **50** mounted therein. The first and the second cassette holders **21** and **23** respectively have side walls **21a** and **23a** opposed to the side surfaces of the ACC **50**, bottom portions **21b** and **23b** extending inward from the side walls **21a** and **23a**, and top portions **21c** and **23c** extending inward from the side walls **21a** and **23a**. The bottom portions **21b** and **23b** are closer to the upper plate **11** than the top portions **21c** and **23c** are. A distance **L₄** between the side walls **21a** and **23a** is substantially identical with the width **L₁** of the cassette main body **54** of the ACC **50** (Figure **6**) and also identical with the width **L₃** of the cassette main body **31** of the DCC **30** (Figure **4A**). The side walls **21a** and **23a** respectively have slots **21d** and **23d** into which the guiding projections **54a** are inserted. The slots **21d** and **23d** extend in the longitudinal direction of the cassette holders **21** and **23**. Upper and lower portions of the side wall **21a** enclosing the slot **21d** are connected with each other by a reinforcing connector **21e**, and upper and lower portions of the side wall **23a** enclosing the slot **23d** are also connected with each other by a reinforcing connector **23e**. The reinforcing connectors **21e** and **23e** are folded to project outward. In this construction, although the distance **L₄** is substantially identical with the widths **L₁** and **L₃**, the ACC **50** having the guiding projections **54a** is reliably held by the first and the second cassette holders **21** and **23**.

The first and the second cassette holders **21** and **23** respectively include the top portions **21c** and **23c**. The top portions **21c** and **23c** have portions folded downward (toward the upper plate 11) as leaf springs **21f** and **23f** extending in the longitudinal direction of the first and the second cassette holders **21** and **23**. The leaf springs **21f** and **23f** are provided for pressing the DCC **30** and the ACC **50** having different thicknesses.

As is shown in Figure **5**, the upper plate **11** has four cassette supporting pins **14** extending upward (toward the first and the second cassette holders **21** and **23**) in the vicinity of corners thereof. When the ACC **50** or the DCC **30** is mounted in the cassette tape mount parallel with the upper plate **11**, the supporting pins **14** stably position the ACC **50** or the DCC **30** which is pressed by the leaf springs **21f** and **23f**. The supporting pins **14** may be provided in three or in other numbers as long as the ACC **50** or the DCC **30** is stably positioned.

The top portions **21c** and **23c** have portions folded upward (away from the upper plate **11**) as leaf springs **21g** and **23g** extending in the longitudinal direction of the first and the second cassette holders **21** and **23**. The top portions **21c** and **23c** further have portions folded upward as leaf springs **21h** and **23h** extending in different directions from the leaf springs **21g** and **23g**. The leaf springs **21h** and **23h** are disposed closer to the holder main body **15** than the leaf springs **21g** and **23g** are. The leaf springs **21g**, **23g**, **21h** and **23h** bias a cassette cover (not shown) away from the upper plate **11**, the cassette cover covering the ACC **50** or DCC **30** as well as the first and the second cassette holders **21** and **23**.

As is shown in Figures **1** and **2**, the upper plate **11** of the cassette tape mount has a cutout **12** against which the thick portion **58** (Figure **5**) abuts when the ACC **50** is mounted. The lower plate **13** is fixed to the upper plate **11** through a plurality of shafts and pins (not shown) with a specified distance therebetween to cover the cutout **12**.

The first and second pinch rollers **27** and **28** are each rotatably supported at an end of a pinch roller arm (not shown) and extend parallel with the holder main body **15**. The pinch roller arms are each biased by a spring wound around an arm shaft thereof to position the pinch rollers **27** and **28** away from a back wall of the holder main body **15**.

As is shown in Figure **1**, a shutter operating mechanism **60** for sliding the shutter **36** of the DCC **30** is provided in the vicinity of the first cassette holder **21**. The shutter operating mechanism **60** includes an arm **62** and a torsion spring **63** about a supporting shaft **61** which provides a pivot point for the arm **62**. The torsion spring **63** biases the arm **62** away from the holder main body **15**. The arm **62** includes a base portion **62a** and a leading portion **62b**. The base portion **62a** of the arm **62** is rotatably supported by a supporting shaft **61** which is supported by the holder main body **15** and the first cassette holder **21**. The leading portion **62b** is extended from the base portion **62a**. The base portion **62a** is substantially flat to be flush against the top surface of the DCC **30**.

The supporting shaft **61** is provided in a groove **16** of the holder main body **15**. The torsion spring **63** is in engagement with the supporting shaft **61**. An end **63a** of the torsion spring **63** is fixed by a wall of the groove **16**, and another end **63b** of the torsion spring **63** is in contact with a projection of the arm **62** projecting downward from the base portion **62a**. The arm **62** is biased by the torsion spring **63** to be inclined so as to position the leading portion **62b** of the arm **62** diagonally across the open cavity of the cassette tape mount. An end of the arm **62** is opposed to a middle part of the first cassette holder **21** in the longitudinal direction thereof. The first cassette holder **21** extends farther than the end of the arm **62** from the holder main body **15**. The second cassette holder **23** has an identical length with that of the first cassette holder **21**.

The arm **62** has a shutter operating shaft **67** at the end thereof. The shutter operating shaft **67** extends downward perpendicular to the length of the arm **62**. When the DCC **30** is first inserted along the first and the second cassette holders **21** and **23**, the shutter operating shaft **67** is positioned in the notch **39a** of the guide **39**. When the DCC **30** is further inserted, the shutter operating shaft **67** is slid along the guide **39**, thereby sliding open the shutter **36** against the force of the spring. When the DCC **30** is further inserted, the shutter operating shaft **67** is recessed into the lock groove **40**. At this point, the shutter **36** is locked with the openings **33** through **35** being uncovered as is shown in Figure **2**.

The holder main body **15** has an arm housing portion **15a**. When the ACC **50** is inserted, the arm **62** is pressed toward the holder main body **15** and then is fully recessed in the arm housing portion **15a**. Even if the DCC **30** is erroneously inserted from the back side thereof, or the arm **62** is forcibly moved by an external force, the arm **62** is protected from breaking by the arm housing portion **15a**.

As is mentioned above, the first and the second cassette holders **21** and **23** extend farther than the end of the arm **62** biased by the torsion spring **63**. Accordingly, the shutter operating shaft **67** contacts the guide **39** of the DCC **30** with high precision when the DCC **30** is held between the first and the second cassette holders **21** and **23**. Moreover, since the upper and the lower portions of the side walls **21a** and **23a** enclosing the slots **21d** and **23d** are connected by the reinforcing connectors **21e** and **23e**, the side walls **21a** and **23a** are reinforced and thus prevented from deforming even when the ACC **50** is not inserted normally.

The mounting of a DCC **30** in a cassette tape mount having the above construction will now be described.

As is shown in Figure **3**, the holder main body **15** is pivoted until the first and the second cassette holders **21** and **23** are slanted with respect to the upper plate **11**. The DCC **30** is inserted along the first and the second cassette holders **21** and **23** from the front face **31a** having the openings **33** through **35** in the direction of an arrow **A** in Figures **1** and **3**. At this point, the arm **62** remains biased away from the holder main body **15**. When the DCC **30** is further inserted, the shutter operating shaft **67** is put into the notch **39a** of the DCC **30** (Figure **1**). When the DCC **30** is further inserted, the shutter operating shaft **67** is slid along the guide **39**, thereby sliding open the shutter **36** with respect to the cassette main body **31**.

The DCC **30** is inserted along the first and the second cassette holders **21** and **23** while side portions of the DCC **30** are pressed toward the bottom portions **21b** and **23b** by the leaf springs **21f** and **23f** extending from the top portions **21c** and **23c** of the first and the second cassette holders **21** and **23**. The side portions of the DCC **30** extend perpendicular to the tape stretching direction.

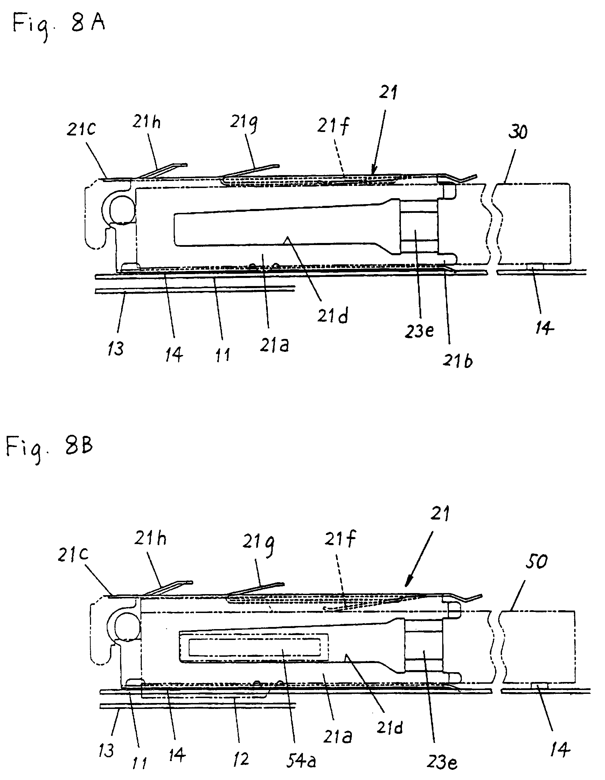

When the shutter **36** is slid with respect to the cassette main body **31** to uncover the openings **33** through **35**, the shutter operating shaft **67** is recessed into the lock groove **40** and the shutter **36** is locked with the openings **33** through **35** being uncovered. Then, the first and the second cassette holders **21** and **23** are pivoted to be parallel with the upper plate **11**. As is shown in Figures **2** and **8A**, the DCC **30** is stably positioned by the supporting pins **14**. In this state, the magnetic head **25** is inserted into the opening **34** and the pinch rollers **27** and **28** are inserted into the openings **33** and **35**, and recording to or reproduction from the magnetic tape **32** is possible.

Upon removal of the DCC **30** from the cassette tape mount, the arm **62** and the other members of the cassette tape mount and the DCC **30** are operated in an opposite manner.

The mounting of the ACC **50** in a cassette tape mount having the above construction will now be described.

The holder main body **15** is pivoted until the first and the second cassette holders **21** and **23** are slanted with respect to the upper plate **11**. When the ACC **50** is inserted from the front face **54b** thereof along the first and the second cassette holders **21** and **23**, the guiding projections **54a** on the side surfaces of the ACC **50** are inserted into the slots **21d** and **23d** and are guided along the slots **21d** and **23d** in the state of projecting outward from the side walls **21a** and **23a**. Since the reinforcing connectors **21e** and **23e** are folded to be projected outward, the reinforcing connectors **21e** and **23e** do not contact the guiding projections **54a**. Moreover, since side portions of the ACC **50** are pressed toward the bottom portions **21b** and **23b** by the leaf springs **21f** and **23f**, the ACC **50** is inserted while being guided by the bottom portions **21b** and **23b**. The side portions of the ACC **50** extend perpendicular to the tape stretching direction.

While the guiding projections **54a** are inserted into the slots **21d** and **23d**, the shutter operating shaft **67** contacts an upper front periphery **59** of the thick portion **58** of the ACC **50**, thereby pivoting the arm **62** toward the holder main body **15**. The ACC **50** is inserted until the arm **62** is recessed in the arm housing portion **15a** as is shown in Figure **5**. In the state where the ACC **50** is completely inserted into the cassette tape mount, the guiding projections **54a** are inserted in the slots **21d** and **23d**. Then, the first and the second cassette holders **21** and **23** are pivoted to be in parallel with the upper plate **11** as is shown in Figure **8B**. Thus, the thick portion **58** of the ACC **50** is put in the cutout **12**, and the remaining portion of the ACC **50** is positioned by the supporting pins **14**. Thus, the entire portion of the ACC **50** is stably supported.

Upon removal of the ACC **50** from the cassette tape mount, the arm **62** and other members of the cassette tape mount and the ACC **50** are operated oppositely.

### Example 2

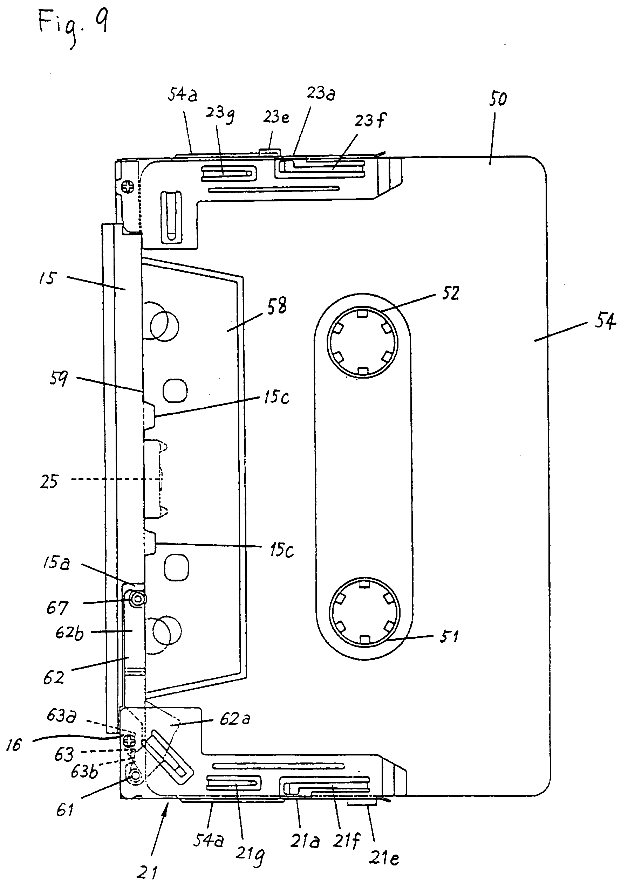

Figures **9** through **11** show a cassette tape mount for use in a cassette tape recorder according to a second example of the present invention. The cassette tape mount of the cassette tape recorder according to the second example is distinct from the cassette tape mount according to the first example in that a surface of the holder main body **15** has a pair of regulating projections **15c** extended along a surface of the thick portion **58** of the ACC **50**, mounted in the cassette tape mount, the surface being spaced from the upper plate **11**. The surface of the holder main body **15** is on a substantially identical level with the top portions **21c** and **23c** of the cassette holders **21** and **23**.

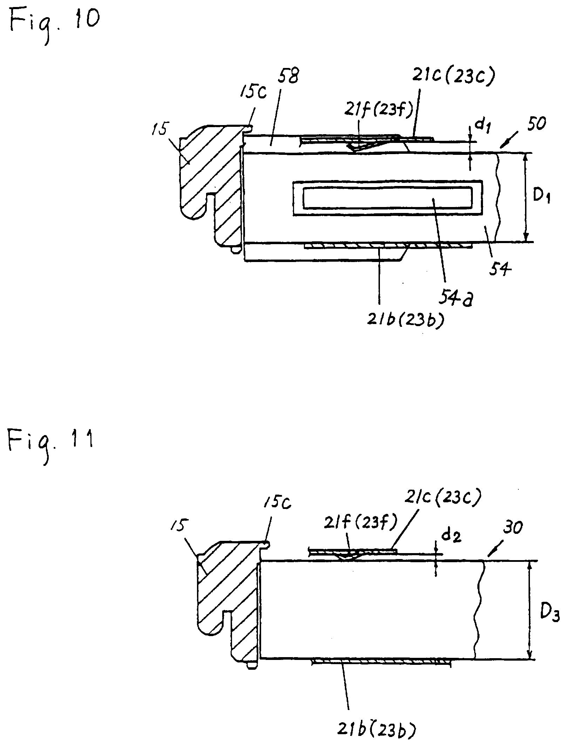

As is shown in Figures **4A** and **6**, the thickness **D₁** of the cassette main body **54** of the ACC **50** with the exception of the thick portion **58** is smaller than the thickness **D₃** of the DCC **30**. Accordingly, a distance **d₁** (Figure **10**) between a top surface of the ACC **50** and the top portion **21c** or **23c** is larger than a distance **d₂** (Figure **11**) between the top surface of the DCC **30** and the top portion **21c** or **23c**. Accordingly, the leaf springs **21f** and **23f** each has a smaller pressing force to the ACC **50** than to the DCC **30**, thereby possibly causing the ACC **50** to be held slightly unstably. However, the regulating projections **15c** regulates a level of the top surface of the thick portion **58**, and thus prevents the ACC **50** from vibrating with respect to the upper plate **11** due to vibration or other external force applied to the cassette tape recorder. As a result of this construction, the magnetic head **25** is in stable contact with the magnetic tape **53**. In the case of the DCC **30**, the magnetic tape **53** is always in stable contact with the magnetic head **25** since the DCC **30** is pressed by the leaf springs **21f** and **23f** with a sufficient force even if vibration or other external force is applied to the cassette tape recorder.

Various other modifications will be apparent to and can be readily made by those skilled in the art without departing from the scope and spirit of this invention. Accordingly, it is not intended that the scope of the claims appended hereto be limited to the description as set forth herein, but rather that the claims be broadly construed.

## Claims

1. A cassette tape mount for use in a cassette tape recorder for selectively receiving a first tape cassette having a shutter and a second tape cassette having no shutter,
the first tape cassette including a magnetic tape having a stretched portion and also including an opening in a face of the tape cassette for exposing the stretched portion of the magnetic tape, the first tape cassette further including a shutter over the face which is slidable with respect to the face to uncover the opening, and
the second tape cassette including a magnetic tape having a stretched portion and also including an opening in a face of the tape cassette for exposing the stretched portion of the magnetic tape, the second tape cassette further including a thick portion in the vicinity of the opening, the thick portion having a larger thickness in a width direction of the magnetic tape than the face of the first tape cassette, the second tape cassette further including guiding projections on side surfaces extending perpendicular to a direction in which the magnetic tape is stretched, a distance between the side surfaces being substantially identical with a width of the first tape cassette in the direction in which the magnetic tape is stretched,
the cassette tape mount comprising:
a pair of cassette holders for holding side portions of an inserted tape cassette extending perpendicular to the direction in which the magnetic tape is stretched, the cassette holders being pivotable between a tape inserting position and an operating position, each cassette holder including a side wall opposed to the side surface of the inserted tape cassette, a slot provided at the side wall for receiving the guiding projection, a pair of extending portions extending from the side wall substantially perpendicular to the side wall, and spring means provided at one of the extending portions for pressing the side portion of the inserted tape cassette against the other of the extending portions.

2. A cassette tape mount according to claim 1, further comprising a plate which is parallel with the cassette holders when the cassette holders are in the operating position, the plate including a cutout for receiving the thick portion of the second tape cassette which is held by the cassette holders in the operating position.

3. A cassette tape mount according to claim 2, wherein the plate includes a plurality of supporting pins for supporting an inserted tape cassette when the cassette holders are in the operating position, the second tape cassette being supported at portions other than the thick portion.

4. A cassette tape mount according to claim 1, further comprising a plate which is parallel with the cassette holders when the cassette tape mount is in the operating position, a holder main body which is pivotably supported so as to be opposed to the opening of an inserted tape cassette and which has the cassette holders, and a projection extending from a holder main body parallel to the cassette holders and spaced from the plate to hold the second tape cassette in the operating position within the cassette tape mount.

5. A cassette tape mount for use in a cassette tape recorder for receiving different types of tape cassettes, the cassette tape mount comprising:
a pair of cassette holders for holding side portions of an inserted tape cassette extending perpendicular to a distance in which a magnetic tape is stretched, the cassette holder being pivotable between a tape inserting position and an operating position, each cassette holder including a side wall opposed to a side surface of an inserted tape cassette extending parallel with the side portions, a slot provided at the side wall for receiving a guiding projection of an inserted tape cassette, a pair of extending portions extending from the side wall substantially perpendicular to the side wall, and spring means provided at one of the extending portions for pressing the side portion of an inserted tape cassette against the other of the extending portions.
